# EUROPEAN PATENT SPECIFICATION

(11) **EP 1 557 696 B1**
(45) Date of publication and mention of the grant of the patent: **09.11.2011**
(21) Application number: 05250344.8
(22) Date of filing: 24.01.2005
(51) Int. Cl.: G01V 3/15

(54) **Monitoring a geotextile located in the ground**
Überwachung von einem Geofaserstoff im Boden
Surveillance d'un géotextile localisé dans le sol

(30) Priority: 23.01.2004 GB 0401534
(43) Date of publication of application: 27.07.2005
(73) Proprietor: Jackson, Peter James, Melbourne Derbyshire DE73 1EQ (GB)
(72) Inventor: Jackson, Peter James, Melbourne Derbyshire DE73 1EQ (GB)
(74) Representative: Lawrence, John

(56) References cited:
- EP-A- 0 899 702
- FR-A- 2 531 234
- FR-A- 2 538 879
- FR-A- 2 667 953
- FR-A- 2 728 677

## Description

This invention concerns improvements in or relating to the monitoring of a geotextile located within the ground. In particular, the invention relates to a method according to the pre-amble of claim 1, an apparatus according to the pre-amble of claim 10 and a geotextile sheet according to the pre-amble of claim 11.

In particular, although not exclusively, the present invention has reference to the monitoring of a geotextile present in subsurface formations such as for example civil engineering foundations for rail tracks, roads or runways and also for the foundations of buildings, for example warehouses, factories, stadia, airport terminals, or other structures that can have a support surface that is desired to be monitored, or may be prone to deformation. It will be appreciated that the stability of such formations is of crucial safety importance especially for passenger traffic, where the integrity of the earthworks is critical.

It is known to deploy geotextiles within or beneath subsurface earthworks, e.g. the ballast bed of for example rail tracks, to enhance mechanical performance of the subsurface earthworks and to provide stability, and further it is known that techniques have been established to detect the presence of such textiles and their physical extent. For example GB- A- 2 378 250 discloses such a technique.

FR-2 531 234 relates to a warning mesh. It finds application in locating and protecting buried pipe works. It is generally formed of a flexible band of perforated plastic and is provided with resonant circuits distributed along its length. The resonant frequency of different resonant circuits can be coded to make each type of mesh identifiable.

FR-2 667 953 relates to a detectable device for identification of optically invisible objects such as buried pipe works. The device is associated with the object to be identified and comprises remotely detectable coding elements corresponding in a unique manner to the object. The coding elements are provided in the form of a succession of linear elements of low thickness, detectable in an electromagnetic way, each forming a surface of pre-determined dimensions and disposed on or in a protective electrically insulating support, wherein the elements are mutually separated by intervals equally of a pre-determined value. Four codes can be used, for example, to distinguish between and identify a drinking water network, a gas network, a telecommunications network and an electric distribution network, all underground.

It is an object of the present invention to provide an improved method and means for non-intrusively monitoring physical properties of a géotextile present in subterranean formations.

According to a first aspect, the invention comprises a method of non-intrusively determining physical properties of a geotextile sheet according to claim 1.

In the context of this invention, a geotextile sheet is a support sheet that links movement of the sheet with parameters of a resonant circuit associated with the sheet.

The geotextile sheet can be located above one type of subterranean formation, for example clay, and below another type of subterranean formation, for example ballast. In other embodiments, the geotextile sheet can be embedded in a subterranean formation, located above a subterranean formation, below a subterranean formation or otherwise in communication with a subterranean formation such that movement of the subterranean formation is communicated to the geotextile sheet.

Preferably, the resonant circuit comprises a coil element. The coil element can be used to receive and transmit the electromagnetic signals.

The resonant circuit may comprise a fuse element that is attached to the geotextile sheet, wherein movement of the geotextile sheet alters electronic properties of the fuse element, which in turn alters parameters of the electromagnetic response signal.

According to a second aspect, the present invention provides apparatus for obtaining signals indicative of physical properties of a geotextile sheet and/or of sub-surface formations in which the geotextile sheet is present in accordance with claim 10.

Alternatively, or additionally, to the processor, the apparatus comprises storage means arranged to store the electromagnetic response signal.

According to a further aspect of the invention, there is provided a geotextile sheet as defined in claim 11.

There is also disclosed herein a train comprising:
a transmitter arranged to transmit an electromagnetic interrogation signal into the ground; and
a receiver arranged to receive an electromagnetic response signal emitted from a resonant circuit associated with a geotextile sheet present under the ground;
wherein physical properties of the geotextile sheet, and/or of material located between the resonant circuit and the receiver, can be determined from the electromagnetic response signal

There is also disclosed herein a method of non-intrusively determining physical properties of material located between a resonant circuit having a geotextile sheet associated therewith and a signal receiving means, the method comprising:
transmitting an interrogating electromagnetic signal towards the resonant circuit in order to induce a current into the resonant circuit;
looking for an electromagnetic response signal emitted by the resonant circuit with a signal receiving means; and
determining physical properties of the material located between the resonant circuit and the signal receiving means from the electromagnetic response signal.

There is also disclosed herein apparatus for determining physical properties of a geotextile sheet, and/or for determining physical properties of a material located between a resonant circuit having a geotextile sheet associated therewith and a signal receiving means, the apparatus comprising:
a signal receiving means arranged to receive an electromagnetic signal; and
a determining means arranged to determine physical properties of the geotextile sheet, and/or determine physical properties of the material located between the resonant circuit and the signal receiving means

Conveniently a series of resonant circuits are provided in association with the geotextile in an appropriate disposition in a subterranean formation where monitoring is required to take place.

A coil element within the resonant circuit may be of a similar type of coil to that used in retail outlet security systems and may include a printed circuit incorporating a fuse element, which represents a weak point capable, upon its functionality being compromised, of providing a different response to the interrogating electromagnetic signal than if the functionality of the fuse element had not been compromised. The response can therefore indicate a change in the integrity status of the geotextile sheet and thus of the underlying or overlying earthworks. The functionality of the fuse element is affected by a modification of the electrical connection in one or more of the resonant circuits. The change in functionality may be designed to eliminate substantially, or modify, the electromagnetic response signal produced by the or each resonant circuit. This provides an indication that the integrity of the fuse element has been compromised, which in turn conveys the information that a change in the status of the subterranean formation has occurred in the vicinity of the geotextile sheet. Such a change may be mechanical movement, failure of the formation, an upwards heave, etc.

The change in functionality of the fuse element may be constituted by its failure, which may conveniently be designed to occur dependent upon the attainment of a predetermined strain value. Alternatively, the change in functionality may be constituted by a change in the performance of the fuse element rather than its failure. For example, if the fuse element is stretched, but not broken, the electronic resistance, or another electrical property of the fuse element, may be altered which will effect properties of the resonant response of the resonant circuit. For example, the frequency and/or amplitude and/or phase and/or Q-factor of the electromagnetic response signal may be affected, thereby enabling the degree of strain/stretching of the geotextile to be determined remotely from the surface. Accordingly, the resonant circuit of which the fuse element forms a part may provide a different response to the interrogating electromagnetic signal thereby indicating a change in the integrity status of the fuse element and thus the geotextile sheet and therefore the subterranean formation in the vicinity of the geotextile sheet.

The Q-factor (or quality factor) of a resonant circuit is a measure of the ratio of the energy stored in the resonant circuit to the energy lost during one cycle of operation. A high Q-factor system is therefore characterised by a resonant response that is maintained over many cycles with only slow loss of amplitude, whereas in low Q-factor systems the response decays quickly over a small number of cycles.

In some applications, properties of the material located between the resonant circuit and the receiver of the electromagnetic response signal can be determined from parameters of the electromagnetic response signal. For example, where ballast or other particulate material is used above the geotextile sheet, the attenuation of the electromagnetic response signal increases as the electrical resistance of the ballast decreases. In ballast the electrical resistance decreases as water-retaining fines and other detritus accumulates within the interstices, and this same process degrades the functionality of the ballast because of increased lubrication. Ballast must eventually be replaced when the lubrication effect is such that the ballast heap cannot withstand the operational load cycle. In the operation of at least some embodiments of the present invention the decreasing amplitude of the electromagnetic response signal emitted by the resonant circuit will be indicative of the functionality of the ballast *per se* and thus will provide an objective assessment of its stability. This application will be advantageous where monitoring occurs over a period of time when using an interrogating transmitter/receiver at a constant distance from the coil, the amplitude of the detected electromagnetic response signal being a function *inter alia* of attenuation losses in the electromagnetic response signal as it passes down to the coil and returns to the receiver.

In the case where a series of resonant circuits are provided, the performance characteristics of the resonant circuits may be identical, or in the alternative different performance characteristics may be applied to different coils or to a group of coils. In particular, where the fuse element is a simple conductor which completes a resonant circuit, mechanical failure of ground beneath the geotextile sheet will eliminate the electromagnetic response signal that would have been emitted from the resonant circuit whose fuse element crosses the point of failure. The elastic characteristics of the fuse element may be modified such that it fails at a particular threshold level of extension. Further, when it is desired to monitor deformation at the geotextile level in the formation over time, a number of resonant circuits having different resonant frequencies may be co-located within the geotextile, each using a fuse element with a different threshold level of extension at failure. The frequency of electromagnetic response signals emitted by each co-located resonant circuit may be monitored to allow progressive extension of the geotextile to be monitored as each system sequentially fails. That is, a geotextile may have different resonant circuits with different resonant frequencies, to enable different levels of strain in the geotextile to be detected.

It is further envisaged that the resonant circuits may be so designed that a parameter of the electromagnetic response signal, and preferably either the resonant frequency or the Q-factor, or both, is controlled by the precise location of a break within the resonant circuit. The existence of a breakage in the fuse element would cause a change in a property of the resonant circuit and hence a change in a parameter of the electromagnetic response signal, to enable the precise location of the breakage to be calculated on the basis of that change. Such information would be of invaluable assistance in carrying out remedial operations on the formation.

In cold conditions it is known that the accumulation of ice within, for example ballast, causes stability problems and accordingly it is desirable to detect ice formation. Whilst the presence of ice may be deduced from temperature measurements using a thermocouple in the vicinity of the geotextile and from measurement of the electrical resistance of the ballast, the present invention may be used in this application also. In particular, at least one, or some, of the coils used in association with the geotextile may be so configured to provide resonant frequencies, Q-factors or other parameters of the electromagnetic response signal indicative of the existence of ice (or of the temperature). For example, a thermocouple, or other temperature sensor, can be included in the resonant circuit, and as the temperature changes so do the resonant frequency and/or any other property of the circuit. The electromagnetic response signal received at the surface can be analysed to determine the temperature in the vicinity of the geotextile and whether or not ice may be present.

The means of transmitting and receiving signals may be mounted on a mobile structure, for example a train in the case of a rail track, a car in the case of a road, or may be manually held. An automated PC-based on-train system, possibly used in association with a Global Positioning System (GPS) or other position determining system, may be provided to monitor parameters of the resonant signal from each coil in the geotextile and to trigger an alarm when a particular coil fails to return a resonant response, or returns a response which does not match a predefined criterion, or differs from the response returned from a previous reading.

In addition to the provision of a resonant circuit within or in association with the geotextile, it is envisioned that a radar reflective formation, which may be a strip, may be provided as part of the fuse element in order to give a more versatile monitoring of the status of the underlying earthworks. For example in the application of the invention to railway tracks, the depth of the ballast bed could be detected using the radar reflective strip. Once a failure on the basis of a loss of resonant response has been detected from a particular element, a detailed 'ground probing radar' (GPR) survey along the reflective strip may allow precise location of the fault.

By way of example only, a method of and apparatus for non-intrusively monitoring subterranean formations having a geotextile embedded therein according to the invention are described below with reference to the accompanying drawings in which:
**Figure 1** is a diagrammatic representation of apparatus according to an embodiment of the present invention;
**Figure 2** is a diagrammatic representation of the resonant circuit shown in Figure 1;
**Figure 3** shows five possible electromagnetic response signals emitted by a resonant circuit according to an embodiment of the present invention;
**Figure 4** shows schematically a plan view of a resonant circuit according to an embodiment of the present invention;
**Figure 5** shows schematically a plan view of a geotextile sheet according to an embodiment of the present invention; and
**Figure 6** shows schematically a plan view of a resonant circuit according to another embodiment of the present invention

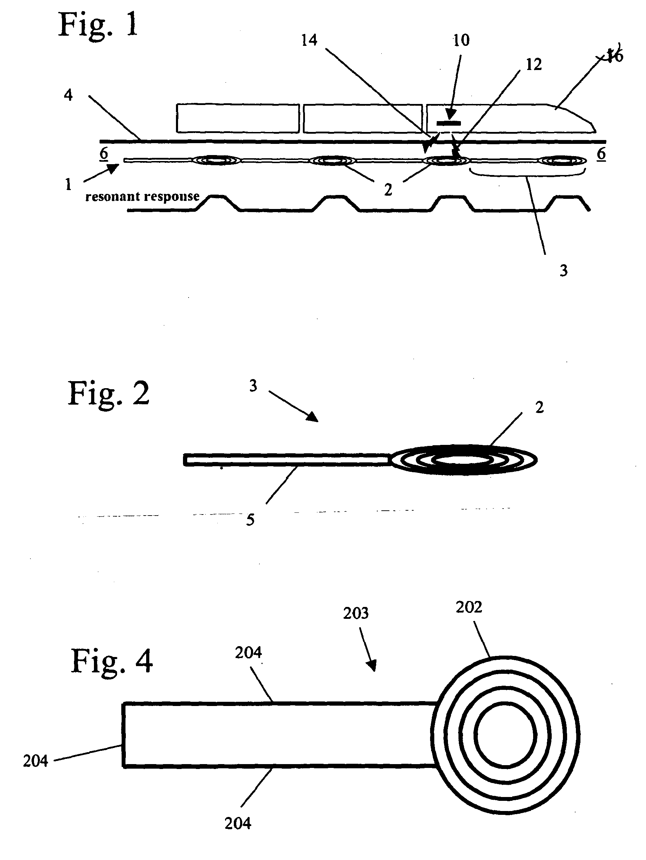

Referring to the drawing, apparatus for non-intrusively monitoring subterranean formations includes in combination a geotextile sheet 1 in which is a series of resonant circuits 3 comprising coils 2 and fuse elements 5. A resonant circuit according to the present invention is shown on a larger scale in Figure 2. The coils may be RF coils which respond to electromagnetic radiation in the radio frequency range. Alternatively, the coils may respond to any other electromagnetic frequency. The resonant circuits return an electromagnetic response signal, which can be a resonant signal.

In some embodiments, the resonant circuit 3 is integral with the geotextile sheet 1, as the resonant circuit 3 is built-in to the geotextile sheet as it is manufactured. The resonant circuits may be integral with non-woven geotextiles. In other embodiments, the RF coils are attached to the geotextile after it has been manufactured. For example, the RF coils could be glued, sewn, stapled or otherwise attached to the geotextile in order that movement of the sheet is linked to parameters of the resonant circuit 3. Resonant circuits may be subsequently attached to woven geotextiles.

The apparatus is illustrated *in situ* in association with a railed transport system including track 4 overlying earthworks 6 constituted by a bed of ballast (not shown). In such a system the geotextile sheet 1 is disposed at the base of the ballast bed, namely at a sub-surface location. The apparatus includes a transmitter-receiver 10 for transmitting an interrogating RF signal shown at 12 and for receiving a resonant signal shown at 14. In this example, the transmitter-receiver 10 is carried on a train 16 running on the track 4.

The train 16 carrying the transmitter-receiver 10 can have the transmitter-receiver 10 in constant operation to monitor all of the track 4 over which it travels. In other embodiments, the transmitter-receiver 10 can be switched on when the train 16 is travelling over regions of the track 4 which are known to be over a geotextile sheet according to the present invention. In further embodiments still, the transmitter-received 10 may be switched on when a specific region of track 4 is desired to be monitored.

In some embodiments, the train 16 also carries a GPS, or other position determining system. When the transmitter-receiver 10 determines that the received resonant signal 14 is not what it is expected to be, the position of the train 16 when the resonant signal 14 was received is recorded, possibly in association with the resonant signal. This can enable a database to be built up identifying areas of track which require attention or further investigation.

In some embodiments, an alarm may be triggered by the transmitter-receiver 10, and the position of the train 16 when the alarm is triggered is recorded. The transmitter-receiver 10 may determine that the received resonant signal 14 should be recorded if its amplitude and/or frequency and/or phase and or Q-factor do not satisfy predefined criteria. For example, criteria that define acceptable depth of the geotextile 1, electrical resistance of the ballast 6, strain experienced by the geotextile 1, integrity of the geotextile 1, etc.

In other embodiments, the resonant signal 14 is constantly recorded in association with the GPS position of the train 16.

Readings obtained by the transmitter-receiver 10 can be used to quickly and efficiently assess which, if any, regions of the track 4 require attention, and in some embodiments to prioritise the regions of track 4 that require attention.

A possible RF response is graphically depicted beneath the illustration of the sheet and coils, and indicates that the integrity of the resonant circuits has not been compromised.

In operation of the method, the responses from the coils are monitored and may yield parametric information in the following ways:
the amplitude of the returned RF signal;
the precise frequency at which the coil resonates;
the rate of decay with time ('Q-factor') of the resonant current generated within the coils;
the phase of the returned RF signal.

This is a non-exhaustive list: other signal parameters or characteristics may provide useful information.

The coils may be advantageously designed such that one or more of these parameters is/are capable of being controlled by a physical characteristic of the subterranean formation to be monitored over time. Essentially upon any change in the performance of the resonant circuit, an indication of a change in the integrity of the geotextile and therefore of the formation is indicated and remedial action is signalled. The response may be indicative of a change in the material overlying the formation, or in the subterranean formation itself, or possibly even in the material beneath the formation.

Accordingly the present invention affords the opportunity to provide a versatile non-intrusive monitoring system which provides a means of ascertaining the integrity of subterranean formations having an embedded geotextile either above or below the geotextile or both.

The invention may also be deployed in combination with Ground Probing Radar (GPR) systems to provide a comprehensive monitoring package.

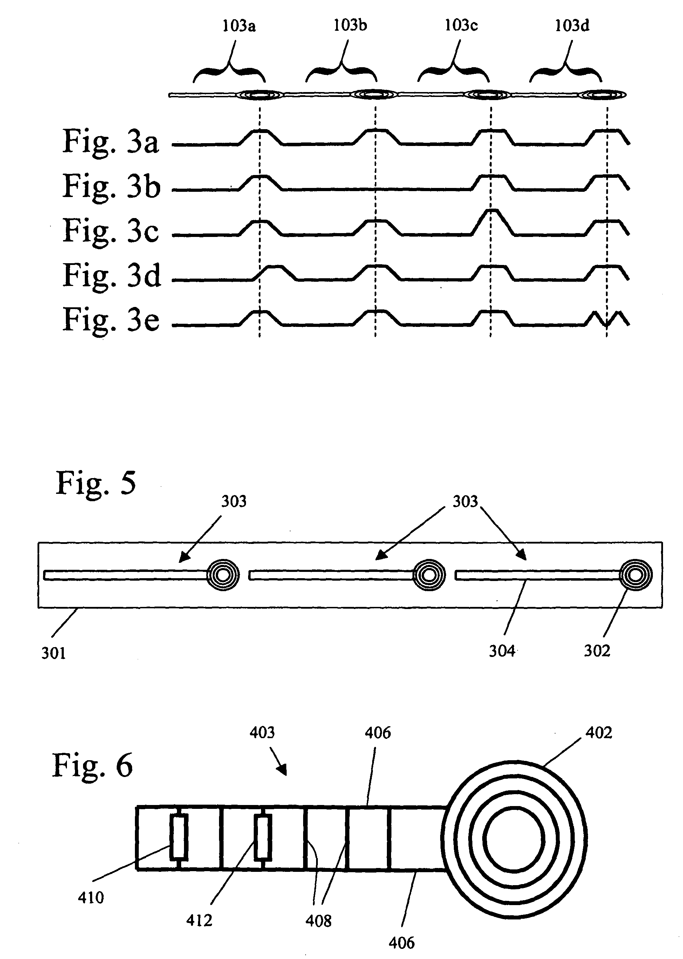

Figure 3 shows graphically a selection of RF responses that can be transmitted by resonant circuits 103a, 103b, 103c, 103d in consequence of a movement of the geotextile sheet to which the resonant circuits are attached.

Figure 3a shows a resonant response where all of the resonant circuit 103a, 103b, 103c, 103d are fully operational and return the same response. This can indicate that the geotextile has not been affected by any underground movements, and that all of the resonant circuits are still in tact.

Figure 3b shows a resonant response where resonant circuit 103b has not returned a response. This can indicate that the resonant circuit has been broken, and will typically be interpreted to mean that the geotextile sheet has been moved or stretched beyond the breaking point of the resonant circuit. In the example of use of the geotextile under a train track, this may cause the identified section of the train track to be closed down until repair work has been completed, and force trains to be rerouted to avoid the identified section of train track.

Figure 3c shows a resonant response where the amplitude of the response returned by resonant circuit 103c is increased. This can indicate that the electrical resistance of the material between the resonant circuit 103c and the receiver that receives the response has decreased. In the train track example, this may be interpreted to mean that the ballast under the train track is waterlogged, and that the ground is more likely to be unstable. In some embodiments, the train operators may close the identified section of the train track until conditions improve. In other embodiments, a restricted speed limit may be introduced in the identified area.

Figure 3d shows a resonant response where the phase of the response returned by resonant circuit 103a is delayed. This can indicate that there has been a change to the electrical properties of the resonant circuit 103a. The interpretation of this change in phase can depend on the layout of the resonant circuit 103a. For example, the change in phase can signify the stretching of a fuse element in the circuit 103a, a change in resistance of the circuit 103a, which may be due to the effects of temperature on a thermistor, or another physical property of the resonant circuit and hence a physical property of the geotextile to which the circuit is attached.

Figure 3e shows a resonant response where the frequency of the response returned by resonant circuit 103d has increased. This is an alternative indication that electrical properties of the resonant circuit 103d have altered, and the interpretation of this change in frequency can depend on the layout of the resonant circuit 103a. For example, the resonant circuit 103d may comprise a number of fuse elements, and frequency of the returned resonant response can be analysed to determine which of the fuse elements have been broken, stretched, or otherwise effected.

It will be appreciated that the interpretations of the resonant responses shown in Figure 3, are discussed by way of example only, and that they depend upon the layout of the circuit in a specific embodiment of the invention. For example, any, or all of the interpretations discussed with reference to any of Figures 3a to 3e could equally apply to any, or all, of the other resonant responses shown in Figures 3a to 3e.

Figure 4 shows a plan view of resonant circuit 203 according to an embodiment of the present invention. The resonant circuit 203 comprises a coil 202 and fuse element 204. The coil comprises a length of wire would around a core (not shown) and is arranged to induce a current in the circuit 203 when it is subjected to electromagnetic radiation, resonate and emit electromagnetic radiation. Parameters of the electromagnetic radiation are set by electrical properties of the resonant circuit. For example the resistance, capacitance, inductance, reactance and/or impedance of the resonant circuit 203 can affect the amplitude, phase, frequency and/or Q-factor of the emitted electromagnetic radiation.

In other embodiments the coil may not be wrapped around a core. In further embodiments still, the coil may comprise a winding track on a printed circuit board. The coil can be any length of electrically conductive material that is capable of inducing a current into the material when it is subjected to electromagnetic radiation, and is also capable of emitting electromagnetic radiation.

In many embodiments, the fuse element 204 is physically much longer than the coil 202. The fuse element will be attached to the area of the geotextile that is to be monitored. The fuse element may be a long wire that is attached to the geotextile in a formation that best covers the area of the geotextile to be monitored.

The coil may comprise elements of conductor that are arranged to act as the fuse element as discussed above. That is, movement of the geotextile to which the coil itself is attached can also be remotely monitored at the surface. A coil arranged to act as a fuse element may be in addition to, or instead of, a separate fuse element as discussed above.

Figure 5 shows schematically a plan view of a sheet of geotextile according to the present invention. The geotextile is for use under a train track and comprises a long, thin rectangular sheet 301 of dimensions suitable for a train track. Three resonant circuits 303 are attached to the geotextile sheet 301. The diameter of the coil 302 of the resonant circuit 303 may be about 10cm, and the fuse element 304 may be of the order of 10m long. The resonant circuits 303 are preferably placed end-to-end to provide good coverage of the geotextile sheet 301.

The length of the resonant circuits and their spacing can be chosen in accordance with the sampling rate of the system that monitors their response. For example, if a system having a slow sampling rate is used to transmit and receive electromagnetic signals to and from the resonant circuit, a relatively long distance resonant circuit may be used.

Figure 6 shows schematically a resonant circuit 403 according to another embodiment of the invention. The resonant circuit 403 comprises a coil 402, and fuse element. The fuse element comprises a number of parallel links 408 between the two sides 406 of fuse element. The parallel links can be arranged to be fractured at different strain values. Having a number of parallel links 408 that have different breaking points can enable a more accurate estimate of the stress experienced by the geotextile to be estimated. For example, if the two weakest links are broken, the electrical properties of the resonant circuit will be altered and parameters of the emitted resonant signal will vary accordingly. A user on the surface can determine which links have been broken and work out that the amount of strain experienced by the geotextile sheet 301 is greater than the breaking point of the strongest link that has broken and lower than the breaking point of the weakest link that has not broken.

In some embodiments, the links 408 can all have the same properties and still enable useful properties of the geotextile to be determined from the surface. For example the specific location of the fracture along the length of the fuse element may be determined.

A thermistor 410 may be present in one of the links. As the temperature in the vicinity of the geotextile changes, so does the resistance of the thermistor 410. This effects parameters of the resonant response and can allow the temperature in the vicinity of the geotextile to be determined.

A link element can comprise a component 412 that has different properties when compared to the rest of the link element. For example, the component 412 of a link element can comprise a region that has a different breaking point, response to temperature, presence of water, etc. compared to the rest of the link element.

A user, knowing the values/properties of the components/links of the resonant circuit 403, can analyse parameters of the electromagnetic response signal received by a receiver on the surface and determine which, if any, of the parallel links 408 have been broken. This can indicate the overall resultant stress experienced by the geotextile sheet, the specific location/s along the length of the fuse element that have experienced stress, temperature change etc.

## Claims

1. A method of non-intrusively monitoring a sub-surface formation (6) having a geotextile sheet (1;301) present therein, the geotextile sheet (1;301) having a resonant circuit (3;203;303;403) associated there with, the resonant circuit including at least a component having an elecricical property altered so as to affect the resonance response of said resonant circuit by changes to the physical properties of said geotextile sheet, the method comprising:
transmitting an interrogating electromagnetic signal (12) towards the resonant circuit (3;203;303;403) in order to induce a current into the resonant circuit (3;203;303;403); and
looking for an electromagnetic response signal (14) emitted by the resonant circuit (3;203;303;403),
determining physical properties of the geotextile sheet (1;301) and/or determining physical properties of the sub-surface formations (6) from parameters of the electromagnetic response signal (14), or from the absence of an electromagnetic response signal (14).

2. The method according to claim 1 wherein one or more of:
the amplitude of the electromagnetic response signal (14);
the frequency of the electromagnetic response signal (14);
the rate of decay with time ('Q-factor') of the electromagnetic response signal (14); and
the phase of the electromagnetic response signal (14);
are parameters of the electromagnetic response signal (14) that represent physical characteristics of the geotextile sheet (1:301) and/or of the sub-surface formation (6).

3. The method according to claim 1 or claim 2 wherein the resonant circuit (3;203;303;403) comprises a coil element (2;202;302;402) and a fuse element (5;204;304;406-412), wherein the coil element (2;202;302;402) is arranged to receive and transmit the interrogating electromagnetic signal (12) and electromagnetic response signal (14) respectively, and the fuse element (5;204;304;406-412) is arranged to provide a variation in the electromagnetic response signal (14) dependent on the functionality of the fuse element (5;204;304;406-412) being compromised.

4. The method according to any one of claims 1 to 3 wherein a plurality of resonant circuits (3;203;303;403) is provided in association with the geotextile sheet (1;301).

5. The method according to claim 4 wherein different performance characteristics are applied to each resonant circuit (3;203;303;403) or to a group of resonant circuits (3;203;303;403).

6. The method according to any preceding claim wherein the resonant circuit comprises a thermocouple, and the thermocouple is arranged to provide a variation in the electromagnetic response signal (14) dependent on the temperature in the vicinity of the geotextile sheet (1;301).

7. The method according to any preceding claim wherein the electromagnetic response signal (14) is detected by a receiver (10) mounted on a train (16).

8. The method according to claim 7 further comprising the step of monitoring the position of the train (16).

9. A method according to any preceding claim wherein the electromagnetic response signal (14) is used to determine physical properties of a material (6) located between the resonant circuit (3;203;303;403) and a means (10) for looking for the electromagnetic response signal (14).

10. Apparatus for obtaining signals indicative of physical properties of a geotextile sheet (1;301) and/or of sub-surface formations (6) in which the geotextile sheet (1;301) is present, the apparatus comprising:
a transmitter (10) arranged to transmit an interrogating electromagnetic signal (12) towards the geotextile sheet (1;301); and
a receiver (10) arranged to look for an electromagnetic response signal (14) generated by an induced current in a resonant circuit (3;203;303;403) of said sheet (1;301), wherein the electromagnetic response signal (14) is indicative of physical properties of the geotextile sheet (1;301), **characterised by** a processor adapted to determine the resonant response of said resonant circuit that includes of least a component having an electrical property altered so as to affect the resorance response of said resonant circuit by changes to the physical properties of said geotextile sheet, and further adapted to derermine physical properties of the geotextile sheet (1;301) and/or physical properties of the sub-surface formations (6), from parameters of the electromagnetic response signal (14), or from the absence of an electromagnetic response signal (14).

11. A geotextile sheet having at least one resonant circuit (3;203;303;403) associated therewith, wherein the resonant circuit (3;203;303;403) is arranged to resonate and emit an electromagnetic response signal (14) when it is subjected to an electromagnetic interrogation signal (12), **characterised in that** the resonant circuit (3;203;303;403) is associated with the geotextile sheet (1;301) and includes an element (5; 204; 304; 406-412) having an electrical property altered so as to affect the resonant response of the resonant circuit (3;203;303;403) by changes to the physical properties of the geotextile sheet (1;301).

## Patentansprüche

1. Eine Methode zur nicht-invasiven Überwachung einer unterirdischen Konstruktion (6), die eine Geotextilschicht (1; 301) enthält, wobei die Geotextilschicht (1; 301) einen Schwingkreis (3; 203; 303; 403) aufweist, von dem eine elektrische Eigenschaft so geändert wurde, dass die Resonanzreaktion des genannten Schwingkreises durch Änderungen der physikalischen Eigenschaften der genannten Geotextilschicht beeinflusst wird; wobei die Methode aus folgenden besteht:
Übertragung eines elektromagnetischen Abfragesignals (12) zum Schwingkreis (3; 203; 303; 403) zur Induktion eines Stroms in den Schwingkreis (3; 203; 303; 403); und
Suche nach einem elektromagnetischen Antwortsignal (14), das vom Schwingkreis (3; 203; 303; 403) abgegeben wird;
Bestimmung der physikalischen Eigenschaften der Geotextilschicht (1; 301) und/oder Bestimmung der physikalischen Eigenschaften der unterirdischen Konstruktionen (6) aus den Parametern des elektromagnetischen Antwortsignals (14) oder aus dem Nichtvorhandensein eines elektromagnetischen Antwortsignals (14).

2. Die Methode entsprechend Anspruch 1, wobei eine oder mehrere der folgenden:
nämlich die Amplitude des elektromagnetischen Antwortsignals (14);
die Frequenz des elektromagnetischen Antwortsignals (14);
die Abklinggeschwindigkeit mit der Zeit (,Q-Faktor') des elektromagnetischen Antwortsignals (14); und
die Phase des elektromagnetischen Antwortsignals (14) Parameter des elektromagnetischen Antwortsignals (14) sind, welche die physikalischen Eigenschaften der Geotextilschicht (1; 301) und/oder der unterirdischen Konstruktion (6) repräsentieren.

3. Die Methode entsprechend Anspruch 1 oder 2, wobei der Schwingkreis (3; 203; 303; 403) ein Spulenelement (2; 202; 302; 402) und ein Sicherungselement (5; 204; 304; 406-412) enthält, wobei das Spulenelement (2; 202; 302; 402) so angeordnet ist, dass es jeweils das elektromagnetische Abfragesignal (12) und das elektromagnetische Antwortsignal (14) empfängt und überträgt, und das Sicherungselement (5; 204; 304; 406-412) so angeordnet ist, dass es eine Variation im elektromagnetischen Antwortsignal (14) liefert, was davon abhängt, dass die Funktionalität des Sicherungselements (5; 204; 304; 406-412) kompromittiert wird.

4. Die Methode entsprechend einem der Ansprüche 1 bis 3, wobei eine Reihe von Schwingkreisen (3; 203; 303; 403) in Verbindung mit der Geotextilschicht (1; 301) vorgesehen ist.

5. Die Methode entsprechend Anspruch 4, wobei unterschiedliche Leistungseigenschaften auf jeden Schwingkreis (3; 203; 303; 403) oder auf einer Gruppe von Schwingkreisen (3; 203; 303; 403) angewandt werden.

6. Die Methode entsprechend einem der vorangegangenen Ansprüche, wobei der Schwingkreis ein Thermoelement enthält und das Thermoelement so angeordnet ist, dass es, je nach der Temperatur in Nähe der Geotextilschicht (1; 301), eine Variation des elektromagnetischen Antwortsignals (14) liefert.

7. Die Methode entsprechend einem der vorangegangenen Ansprüche, wobei das elektromagnetische Antwortsignal (14) von einem auf einem Zug (16) montierten Empfänger (10) erfasst wird.

8. Die Methode entsprechend Anspruch 7, zu der zudem der Schritt der Überwachung der Position des Zugs (16) gehört.

9. Eine Methode entsprechend einem der vorangegangenen Ansprüche, wobei das elektromagnetische Antwortsignal (14) dazu verwendet wird, die physikalischen Eigenschaften eines Materials (6), das sich zwischen dem Schwingkreis (3; 203; 303; 403) und einer Möglichkeit (10) zur Suche nach dem elektromagnetischen Antwortsignal (14) befindet, zu bestimmen.

10. Eine Vorrichtung zum Erhalt von Signalen, welche die physikalischen Eigenschaften einer Geotextilschicht (1; 301) und/oder unterirdischer Konstruktionen (6), die eine Geotextilschicht (1; 301) enthalten, anzeigt, wobei die Vorrichtung aus folgenden besteht:
einem Transmitter (10, der so angeordnet ist, dass er ein elektromagnetisches Abfragesignals (12) zur Geotextilschicht (1; 301) überträgt; und
einem Empfänger (10), der so angeordnet ist, dass er ein elektromagnetisches Antwortsignal (14) sucht, dass von einem induzierten Strom in einem Schwingkreis (3; 203; 303; 403) der genannten Schicht (1; 301) erzeugt wird, wobei das elektromagnetische Antwortsignal (14) die physikalischen Eigenschaften der Geotextilschicht (1; 301) anzeigt, **dadurch gekennzeichnet, dass** ein Prozessor so adaptiert ist, dass er die Resonanzreaktion des genannten Schwingkreises, zu dem zumindest eine Komponente gehört, bei der eine elektrische Eigenschaft so geändert wurde, damit die Resonanzreaktion des genannten Schwingkreises durch die Änderungen an den physikalischen Eigenschaften der genannten Geotextilschicht beeinflusst wird, bestimmt; und zudem so adaptiert ist, dass er die physikalischen Eigenschaften der Geotextilschicht (1; 301) und/oder die physikalischen Eigenschaften der unterirdischen Konstruktionen (6) aus Parametern des elektromagnetischen Antwortsignals (14) oder aus dem Nichtvorhandensein eines elektromagnetischen Antwortsignals (14) bestimmt.

11. Eine Geotextilschicht mit mindestens einem Schwingkreis (3; 203; 303; 403), wobei der Schwingkreis (3; 203; 303; 403) so angeordnet ist, dass er mitschwingt und ein elektromagnetisches Antwortsignals (14) abgibt, wenn er einem elektromagnetischen Abfragesignal (12) unterworfen wird, **dadurch gekennzeichnet, dass** der Schwingkreis (3; 203; 303; 403) mit der Geotextilschicht (1; 301) verbunden ist und ein Element (5; 204; 304; 406-412) aufweist, bei dem eine elektrische Eigenschaft so geändert wurde, dass die Resonanzreaktion des Schwingkreises (3; 203; 303; 403) durch Änderungen in den physikalischen Eigenschaften der Geotextilschicht (1; 302) beeinflusst wird.

## Revendications

1. Procédé de surveillance non intrusive d'une formation souterraine (6) possédant une feuille de géotextile (1 ; 301) présente en son sein, la feuille de géotextile (1 ; 301) munie d'un circuit résonnant (3 ; 203 ; 303 ; 403) présentant une propriété électrique altérée de manière à affecter la réponse de résonnance dudit circuit résonnant par des modifications apportées aux propriétés physiques de ladite feuille de géotextile, le procédé comprenant :
la transmission d'un signal électromagnétique d'interrogation (12) en direction du circuit résonnant (3 ; 203 ; 303 ; 403) de manière à induire un courant dans le circuit résonnant (3 ; 203 ; 303 ; 403) ; et
la recherche d'un signal de réponse électromagnétique (14) émis par le circuit résonnant (3 ; 203 ; 303 ; 403),
la détermination des propriétés physiques de la feuille de géotextile (1 ; 301) et/ou la détermination des propriétés physiques des formations souterraines (6) à partir des paramètres du signal de réponse électromagnétique (14) ou à partir de l'absence d'un signal de réponse électromagnétique (14).

2. Procédé selon la revendication 1, dans lequel un ou plusieurs de :
l'amplitude du signal de réponse électromagnétique (14) ;
la fréquence du signal de réponse électromagnétique (14) ;
la vitesse de décroissance avec le temps ("Facteur Q") du signal de réponse électromagnétique (14) ; et
la phase du signal de réponse électromagnétique (14) ;
sont des paramètres du signal de réponse électromagnétique (14) qui représentent les caractéristiques physiques de la feuille de géotextile (1 ; 301) et/ou de la formation souterraine (6).

3. Procédé selon la revendication 1 ou la revendication 2, dans lequel le circuit résonnant (3 ; 203 ; 303 ; 403) comprend un élément de bobine (2 ; 202 ; 302 ; 402) et un élément de fusible (5 ; 204 ; 304 ; 406-412), dans lequel l'élément de bobine (2 ; 202 ; 302 ; 402) est aménagé de manière à recevoir et à transmettre le signal électromagnétique d'interrogation (12) et le signal de réponse électromagnétique (14) respectivement et l'élément de fusible (5 ; 204 ; 304 ; 406 -412) est aménagé de manière à fournir une variation du signal de réponse électromagnétique (14) selon si la fonctionnalité de l'élément de fusible (5 ; 204 ; 304 ; 406-416) est compromise.

4. Procédé selon l'une quelconque des revendications 1 à 3, dans lequel une pluralité de circuits résonnants (3 ; 203 ; 303 ; 403) est fournie en association à la feuille de géotextile (1 ; 301).

5. Procédé selon la revendication 4, dans lequel différentes caractéristiques de performance sont appliquées à chaque circuit résonnant (3 ; 203 ; 303 ; 403) ou à un groupe de circuits résonnants (3 ; 203 ; 303 ; 403).

6. Procédé selon l'une quelconque des revendications précédentes, dans lequel le circuit résonnant est muni d'un thermocouple et le thermocouple est aménagé de manière à fournir une variation du signal de réponse électromagnétique (14) en fonction de la température dans le voisinage de la feuille de géotextile (1 ; 301).

7. Procédé selon l'une quelconque des revendications précédentes, dans lequel le signal de réponse électromagnétique (14) est détecté par un récepteur (10) monté sur train (16).

8. Procédé selon la revendication 7 comprenant en outre l'étape de surveillance de la position du train (16).

9. Procédé selon l'une quelconque des revendications précédentes, dans lequel le signal de réponse (14) est utilisé pour déterminer les propriétés physiques d'un matériau (6) situé entre le circuit résonnant (3 ; 203 ; 303 ; 403) et un moyen (10) de recherche du signal de réponse électromagnétique (14).

10. Appareil d'obtention de signaux indicateurs des propriétés physiques d'une feuille de géotextile (1 ; 301) et/ou de formations souterraines (6) dans lequel la feuille de géotextile (1 ; 301) est présente, l'appareil comprenant :
un transmetteur (10) aménagé pour transmettre un signal électromagnétique d'interrogation (12) en direction de la feuille de géotextile (1 ; 301) ; et
un récepteur (10) aménagé pour rechercher un signal de réponse électromagnétique (14) généré par un courant induit dans un circuit résonnant (3 ; 203 ; 303 ; 403) de ladite feuille (1 ; 301), dans lequel le signal de réponse électromagnétique (14) est indicateur des propriétés physiques de la feuille de géotextile (1 ; 301), **caractérisé par** un processeur adapté pour déterminer la réponse résonnante dudit circuit résonnant qui comprend au moins un composant possédant une propriété électrique altérée de manière à affecter la réponse de résonnance dudit circuit résonnant par des modifications apportées aux propriétés physiques de ladite feuille de géotextile et en outre adapté pour déterminer les propriétés physiques de ladite couche de géotextile (1 ; 301) et/ou les propriétés physiques des formations souterraines (6) à partir des paramètres du signal de réponse électromagnétique (14) ou à partir de l'absence d'un signal de réponse électromagnétique (14).

11. Feuille de géotextile possédant au moins un circuit résonnant (3 ; 203 ; 303 ; 403) qui lui est associé, dans lequel le circuit résonnant (3 ; 203 ; 303 ; 403) est aménagé de manière à résonner et à émettre un signal de réponse électromagnétique (14) lorsqu'il est soumis à un signal d'interrogation électromagnétique (12), **caractérisé en ce que** le circuit résonnant (3 ; 203 ; 303 ; 402) est associé à la feuille de géotextile (1 ; 301) et contient un élément (5 ; 204 ; 304 ; 406-412) dont une propriété électrique est altérée de manière à affecter la réponse résonnante du circuit résonnant (3 ; 203 ; 303 ; 403) par des modifications de la feuille de géotextile (1 ; 301).
